(19) Europäisches Patentamt
European Patent Office
Office européen des brevets

(11) **EP 1 918 687 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(51) Int Cl.:
*G01M 11/02* [(2006.01)]     *G01B 11/27* [(2006.01)]
*G02B 7/02* [(2006.01)]     *G02B 27/62* [(2006.01)]

(21) Anmeldenummer: **07011969.8**

(22) Anmeldetag: **19.06.2007**

(54) **Verfahren und Vorrichtung zur Bestimmung der Lage einer Symmetrieachse einer asphärischen Linsenfläche**

Method and device for determining the position of the symmetrical axis of an aspherical lens surface

Procédé et dispositif destinés à la détermination de la position d'un axe symétrique d'une surface de lentille asphérique

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **04.11.2006 DE 102006052047**

(43) Veröffentlichungstag der Anmeldung:
**07.05.2008 Patentblatt 2008/19**

(73) Patentinhaber: **Trioptics GmbH**
**22880 Wedel (DE)**

(72) Erfinder:
• **Heinisch, Josef**
**D-22880 Wedel (DE)**
• **Dumitrescu, Eugen**
**D-22880 Wedel (DE)**

(74) Vertreter: **Schwanhäusser, Gernot et al**
**Ostertag & Partner**
**Patentanwälte**
**Epplestr. 14**
**70597 Stuttgart (DE)**

(56) Entgegenhaltungen:
EP-A- 1 610 089          DE-A1-102004 029 735
DE-A1-102005 013 755    JP-A- 7 128 188
US-A1- 2005 007 547     US-B2- 7 046 351

**Beschreibung**

Die Erfindung betrifft ein Verfahren sowie eine Vorrichtung zur Bestimmung der Lage einer Symmetrieachse einer asphärischen Linsenfläche relativ zu einer Bezugsachse nach dem Oberbegriff des Anspruchs 1 bzw. des Anspruchs 18.

Ein Verfahren und eine Vorrichtung dieser Art sind aus der JP 00 128188 A bekannt.

Bei der Herstellung und Einfassung von Linsen kann es vorkommen, daß die Symmetrieachse einer asphärischen Linsenfläche nicht mit einer Bezugsachse fluchtet, bei der es sich z.B. um eine Symmetrieachse eines zylindrischen Linsenrandes handeln kann. Die Symmetrieachse der asphärischen Linsenfläche kann dabei gegenüber der Bezugsachse parallel versetzt (d.h. dezentriert) und/oder verkippt sein. Solche Lagefehler der Symmetrieachse der asphärischen Fläche rufen im allgemeinen Abbildungsfehler hervor, die nicht oder nur mit großem Aufwand korrigiert werden können.

Deswegen besteht häufig die Aufgabe, bei der Qualitätssicherung im Rahmen der Herstellung asphärischer Linsen, aber auch bei deren Einbau in optische Systeme die Lage der Symmetrieachse der asphärischen Fläche relativ zu einer Bezugsachse hochgenau bestimmen zu können.

Bei einem im Stand der Technik bekannten Verfahren wird mit Hilfe eines Meßtasters die gesamte asphärische Linsenfläche abgetastet, um auf diese Weise ein dreidimensionales Bild der asphärischen Linsenfläche zu erhalten. Aus diesem Bild kann dann die Symmetrieachse der Linsenfläche ermittelt werden. Im Prinzip läßt sich die Symmetrieachse der Linsenfläche sogar durch Vermessung zweier orthogonaler Profile der Linsenfläche bestimmen. Von diesem Verfahren macht beispielsweise ein von der Firma *Taylor* & *Hobsen* unter dem Namen "Form Talysurf PGI 1240" vertriebenes Asphärenmeßsystem Gebrauch. Dieses bekannte Meßverfahren ist allerdings relativ zeitaufwendig und auch nicht berührungsfrei durchführbar.

Aus der DE 10 2005 013 755 A1 der Anmelderin ist ein Verfahren zur Herstellung von Systemen zusammengesetzter sphärischer Linsen bekannt. Bei diesem Verfahren werden die Linsen auf einem Drehtisch um eine mit der Drehachse des Tischs zusammenfallende Bezugsachse gedreht. Mit Hilfe eines Autokollimators werden nacheinander die Krümmungsmittelpunkte der sphärischen Linsenflächen bestimmt. Die beiden Krümmungsmittelpunkte jeder Linse legen die optische Achse der betreffenden Linse fest. Um eine zweite Linse gegenüber einer beliebig angeordneten (d.h. unjustierten) ersten Linse auszurichten, wird die zweite Linse solange relativ zu der ersten Linse bewegt, bis die Krümmungsmittelpunkte der Linsen fluchten.

Aus der US 2005/0007547 A1 ist ein Verfahren bekannt, bei dem der Scheitelpunkt einer asphärischen Linse mit einer Zentrierungsmarke versehen wird. Um einen ggf. vorhandenen radialen Versatz der Zentrierungsmarke von einer mechanischen Achse der Linse, worunter die Symmetrieachse des Linsenrandes verstanden wird, festzustellen, wird die Linse so auf einem Drehtisch ausgerichtet, dass die mechanische Achse parallel zur Drehachse des Drehtischs verläuft. Falls die Zentrierungsmarke radial zur mechanischen Achse versetzt ist, vollführt der Linsenrand bei der Drehung eine Exzenterbewegung, die von einem Abstandssensor erfasst wird. Der radiale Versatz der Zentrierungsmarke von der mechanischen Achse ist dann gleich der Hälfte des gemessenen maximalen Exzenterversatzes.

Aus der eingangs genannten JP 00 128188 A ist ein Verfahren zur Bestimmung der Exzentrizität einer Linse bekannt, die eine sphärische und eine asphärische Fläche hat. Zunächst wird unter Verwendung eines Autokollimators der Krümmungsmittelpunkt des sphärischen Anteils der asphärischen Fläche bestimmt. Dann wird die Linse so auf einer um eine Drehachse drehbaren Halterung ausgerichtet, dass der Krümmungsmittelpunkt auf der Drehachse zu liegen kommt. In einem nächsten Schritt wird der Autokollimator verkippt, um am Rand der asphärischen Fläche den Krümmungsmittelpunkt des asphärischen Anteils zu bestimmen. Daraus wird schließlich die Exzentrizität abgeleitet.

Ein ähnliches Verfahren ist auch aus der US 7 046 351 B1 bekannt. Dort wird ebenfalls zunächst der Krümmungsmittelpunkt des sphärischen Anteils der asphärischen Fläche bestimmt und die Linse so ausgerichtet, dass der Krümmungsmittelpunkt auf der Drehachse zu liegen kommt. Die Bestimmung der Exzentrizität erfolgt anschließend mit Hilfe eines Tastsensors, der am Linsenrand angreift und die Exzenterbewegung der Linse während ihrer Drehung erfasst.

Aufgabe der Erfindung ist es, ein Verfahren und eine Vorrichtung der eingangs genannten Art anzugeben, mit der sich die Lage der Symmetrieachse einer asphärischen Linsenfläche relativ zu einer Bezugsachse schneller mit hoher Genauigkeit ermitteln läßt.

Bezüglich des Verfahrens wird diese Aufgabe durch ein Verfahren mit den Merkmalen des Anspruchs 1 gelöst.

Die Erfinder haben erkannt, daß man die Lage der Symmetrieachse der asphärischen Linsenfläche relativ zu einer Bezugsachse ermitteln kann, wenn man einerseits die Lage des Krümmungsmittelpunktes des sphärischen Anteils der Linsenfläche und andererseits eine Taumelbewegung mißt, welche die Linsenfläche während einer Drehung um eine Drehachse beschreibt. Die Reihenfolge der Messungen in den Schritten a) und b) spielt dabei keine Rolle, so daß die Schritte a) und b) auch in der umgekehrten Reihenfolge durchgeführt werden können.

Eine Taumelbewegung der Linsenfläche entsteht bei einer Drehung immer dann, wenn die Symmetrieachse der asphärischen Linsenfläche dezentriert und/oder verkippt ist. Die Taumelbewegung schlägt sich sowohl in einer Veränderung der Neigung als auch einer Veränderung des Abstands eines radialen Profils der Linsenfläche von einem Bezugspunkt nieder. Aus der Messung der Neigungs- oder Abstandsänderung kann dann in Kenntnis des Krümmungsmittelpunkts des sphärischen Anteils auf die Lage der Symmetrieachse der asphärischen Linsenfläche zurückgeschlossen werden.

Wird die Taumelbewegung durch Vermessung der Neigung eines radialen Profils der Linsenfläche in verschiedenen Drehstellungen gemessen, so kann die Messung folgende weitere Schritte umfassen:

b1) Bestimmung der Neigung des radialen Profils der Linsenfläche in einem Bereich der Linsenfläche, der innerhalb eines Meßfensters liegt;

b2) Verdrehen der Linsenfläche um die Drehachse, so daß ein anderer Bereich der Linsenfläche in das Meßfenster gelangt;

b3) Bestimmen der Neigung des radialen Profils der Linsenfläche in dem anderen Bereich der Linsenfläche;

Das erfindungsgemäße Verfahren liefert zunächst die Lage der Symmetrieachse relativ zu der Drehachse, um welche die Linse während der Messung gedreht wird. Soll die Lage der Symmetrieachse zu einer anderen Bezugsachse bestimmt werden, deren Lage relativ zu der Drehachse bekannt ist, so läßt sich dies einfach unter Berücksichtigung der gemäß dem Verfahren erhaltenen Lage der Symmetrieachse bezüglich der Drehachse ableiten.

Im Prinzip genügen bereits Messungen bei einigen wenigen oder sogar nur zwei Drehstellungen, um die Lage der Symmetrieachse der asphärischen Linsenfläche bestimmen zu können. Der gesamte während der Messungen überstrichene Winkelbereich kann dabei auch relativ klein sein und z.B. weniger als 90° betragen. Eine höhere Meßgenauigkeit wird jedoch erzielt, die Schritte b2) und b3) ein- oder mehrfach wiederholt werden. Im Verlauf der Wiederholungen dieser Schritte wird die Linsefläche um insgesamt 360° gedreht. Dabei wird die Linsenfläche vorzugsweise nach jeder Messung um den gleichen Drehwinkel 360°/M verdreht, wobei M die Gesamtzahl der Messungen ist.

Zur Bestimmung der Lage des Krümmungsmittelpunktes des sphärischen Anteils der Linsenfläche kann ein erster Autokollimator verwendet werden, dessen bildseitiger Brennpunkt in den Krümmungsmittelpunkt des sphärischen Anteils der Linsenfläche gebracht wird. Dadurch wird eine relativ einfache und berührungslose Bestimmung des Krümmungsmittelpunkts möglich. Alternativ hierzu kann aber auch ein Abstandssensor verwendet werden, welcher den Abstand für einen Punkt auf der Drehachse in unterschiedlichen Drehstellungen der Linse mißt. Da die Abstandsänderungen dort jedoch bei der Drehung relativ klein sind, wird die Verwendung eines Autokollimators im allgemeinen eine höhere Meßgenauigkeit liefern.

Um Meßungenauigkeiten bei der Messung des Krümmungsmittelpunkts des sphärischen Anteils der Linsefläche zu verringern, kann der Schritt a) zumindest einmal während der Messung der Taumelbewegung in Schritt b) wiederholt werden. Bei Verwendung eines Autokollimators für die Messung in Schritt a) können auf diese Weise z. B. Meßungenauigkeiten aufgrund eines Versatzes zwischen der optischen Achse des Autokollimators und der Drehachse bestimmt und bei der Auswertung berücksichtigt werden.

Zur Bestimmung der Neigung kann ein zweiter Autokollimator verwendet werden, dessen bildseitiger Brennpunkt in den Krümmungsmittelpunkt des im Meßfenster liegenden Bereichs gebracht wird. Mit Autokollimatoren lassen sich derartige Neigungen hochgenau mit relativ geringem Aufwand messen.

Alternativ hierzu kann zur Messung der Taumelbewegung in Schritt b) der Abstand eines radialen Profils der Linsenfläche zu einem Bezugsort in verschiedenen Drehstellungen der Linse gemessen werden. Eine Vielzahl bekannter taktil oder berührungslos arbeitender Abstandssensoren kann zu diesem Zweck verwendet werden. Die Bestimmung der Taumelbewegung über eine Abstandsmessung dürfte eine noch höhere Genauigkeit im Vergleich zur Neigungsmessung ermöglichen.

Eine zur Durchführung des Verfahrens geeignete Vorrichtung, welche die eingangs bezüglich der Vorrichtung genannte Aufgabe löst, weist die im Anspruch 18 angegebenen Merkmale auf.

Bei der ersten und zweiten Meßeinrichtung kann es sich entweder um eine Einrichtung handeln, mit der sich die Neigung einer Oberfläche bestimmen läßt, z. B. einen Autokollimator, oder aber um einen Abstandssensor, mit dem der Abstand zwischen einem Bezugsort und einem radialen Profil der Linsenfläche entlang einer Meßrichtung meßbar ist.

Im Fall der zweiten Meßeinrichtung ist bei Verwendung eines Abstandssensors der Winkel zwischen der Meßrichtung und der Drehachse vorzugsweise veränderbar. Insbesondere kann der Abstandssensor um eine horizontale Achse verschwenkbar angeordnet sein.

Durch Vorsehen einer dritten Meßeinrichtung sowie einer vierten Meßeinrichtung, die entsprechend der ersten und der zweiten Meßeinrichtung ausgebildet, jedoch auf einer der ersten Meßeinrichtung abgewandten Seite des Drehtischs angeordnet sind, können gleichzeitig oder sukzessive, jedoch ohne Neujustierung der Linse, die Symmetrieachsen von beidseitig gekrümmten Linsen sehr rasch in der erfindungsgemäßen Weise ermittelt werden.

Weist der Drehtisch eine justierbare Halterung zur Befestigung der Linsenfassung auf, so ist es möglich, die zu vermessende Linse nach der Durchführung der Messung in der Fassung neu zu justieren. Mit einer erneuten Messung der Symmetrieachse kann dann verifiziert werden, ob sich die Symmetrieachse der Linse nach der Neujustierung in der Linsenfassung ihrer Solllage ausreichend angenähert hat. In diesem Fall kann der Drehtisch beispielsweise eine Öffnung enthalten, die zur Aufnahme der Linse dient, so daß diese von beiden Seiten her zugänglich ist.

Weitere vorteilhafte Ausgestaltungen sind Gegenstand der Unteransprüche.

Weitere Merkmale und Vorteile der Erfindung ergeben sich aus der nachfolgenden Beschreibung eines Ausführungsbeispiels anhand der Zeichnungen. Darin zeigen:

Figur 1          einen meridionalen Schnitt durch eine Linse, die in einer Ringfassung aufgenommen ist;

Figur 2          ein Ausführungsbeispiel einer erfindungsgemäßen Vorrichtung in einer schematischen Seitenansicht;

Figur 3          einen meridionalen Schnitt durch ein kugelförmiges Meßobjekt und einen Autokollimator, der Bestandteil der in der Figur 2 gezeigten Vorrichtung ist;

Figur 4          eine der Figur 3 entsprechende Darstellung, jedoch mit einem senkrecht zur optischen Achse des Autokollimators versetzten Meßobjekt;

Figur 5          die beiden in der Figur 2 gezeigten Autokollimatoren und eine zu vermessende Linse in einem meridionalen Schnitt, wobei die Asphärenachse der Linse parallel zur optischen Achse eines der Autokollimatoren versetzt ist;

Figuren 6a bis 6d     von den Bildsensoren der Autokollimatoren aufgenommene Bilder bei der in der Figur 5 gezeigten Konstellation;

Figur 7          eine der Figur 5 entsprechende Darstellung, jedoch mit einer zusätzlichen verkippung der Asphärenachse gegenüber der optischen Achse eines der Autokollimatoren;

Figur 8          eine der Figur 7 entsprechende Darstellung für ein anderes Ausführungsbeispiel der Erfindung, bei dem der zweite Autokollimator durch einen Abstandssensor ersetzt ist.

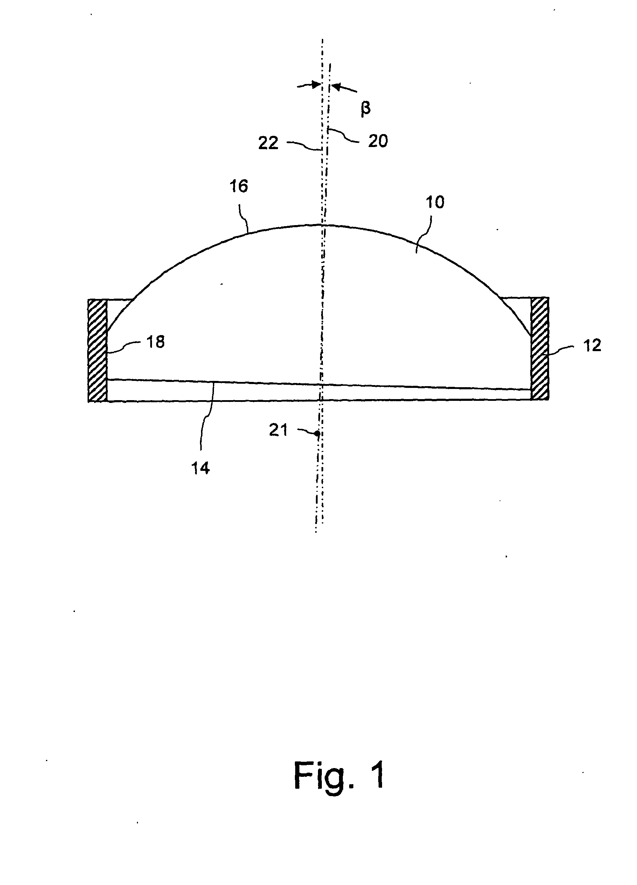

Die Figur 1 zeigt in einem meridionalen Schnitt eine Linse 10, die von einer zylindrischen Ringfassung 12 gehalten ist. Die Linse 10 hat eine Planfläche 14, eine asphärisch-konvexe Linsenfläche 16 sowie einen umlaufenden zylindrischen Linsenrand 18, der an einer zylindrischen Innenfläche der Ringfassung 12 anliegt.

Mit einer strich-doppelpunktierten Linie ist eine Symmetrieachse 20 angedeutet, bezüglich der die asphärische Linsenfläche 16 rotationssymmetrisch ist. Der Einfachheit halber wird die Symmetrieachse im folgenden kurz als Asphärenachse bezeichnet. Auf der Asphärenachse 20 liegt der mit 21 bezeichnete Krümmungsmittelpunkt des sphärischen Anteils der Linsenfläche 16. Die Lage der Linse 10 in der Ringfassung 12 wird durch den zylindrischen Linsenrand 18 bestimmt, dessen Symmetrieachse in der Figur 1 durch eine strichpunktierte Linie 22 angedeutet ist. Nach dem Einfassen der Linse 10 fällt die Symmetrieachse 22 des Linsenrandes 18 mit der Symmetrieachse der Ringfassung 12 zusammen. In optischen Systemen werden Ringfassungen derart hintereinander, z.B. in einem zylindrischen Rohr, angeordnet, daß ihre Symmetrieachsen koaxial verlaufen und die optische Achse des optischen Systems definieren.

Die Planfläche 14, die asphärische Linsenfläche 16 und der Linsenrand 18 werden üblicherweise in unterschiedlichen Prozessen gefertigt. Dadurch kann es vorkommen, daß die Asphärenachse 20 der asphärischen Linsenfläche 16 nicht exakt koaxial zu der Symmetrieachse 22 des Linsenrandes 18 - und damit auch nicht exakt koaxial zur optischen Achse eines übergeordneten optischen Systems - verläuft.

Ist die Asphärenachse 20 zur Symmetrieachse 22 des Linsenrandes 18 parallel versetzt, so spricht man üblicherweise von einer Dezentrierung der Asphärenachse 20. In der Figur 1 ist der Fall der Verkippung dargestellt, bei der die Asphärenachse 20 einen Kippwinkel β mit der Symmetrieachse 22 des Linsenrandes 18 einschließt. In der Figur 1 ist der Winkel β aus Gründen der Übersichtlichkeit stark übertrieben dargestellt; bei hochpräzise gefertigten asphärischen Linsen liegen die Kippwinkel β in der Größenordnung von wenigen Bogensekunden. Die Verkippung kann durch eine zusätzliche Dezentrierung überlagert sein, so daß die Asphärenachse 20 nicht mehr die Symmetrieachse 22 des Linsenrandes 18 schneidet.

Ist die Asphärenachse 20 nicht koaxial zur optischen Achse eines übergeordneten optischen Systems angeordnet, so entstehen Abbildungsfehler, die häufig kaum durch andere Maßnahmen korrigierbar sind. Deswegen muß man vor allem bei optisch hochpräzisen Systemen vor dem Zusammenbau des optischen Systems überprüfen, ob die Asphärenachse 20 koaxial zu der Symmetrieachse 22 des Linsenrandes 18 verläuft. Anstelle der Symmetrieachse 22 des Linsenrandes 18 kann auch eine andere Bezugsachse gewählt werden, relativ zu der die korrekte Lage der Asphärenachse 20 ermittelt wird. Im Falle der Linse 10 kommt beispielsweise als Bezugsachse auch eine parallel zur Planfläche 14 verlaufende Achse in Betracht.

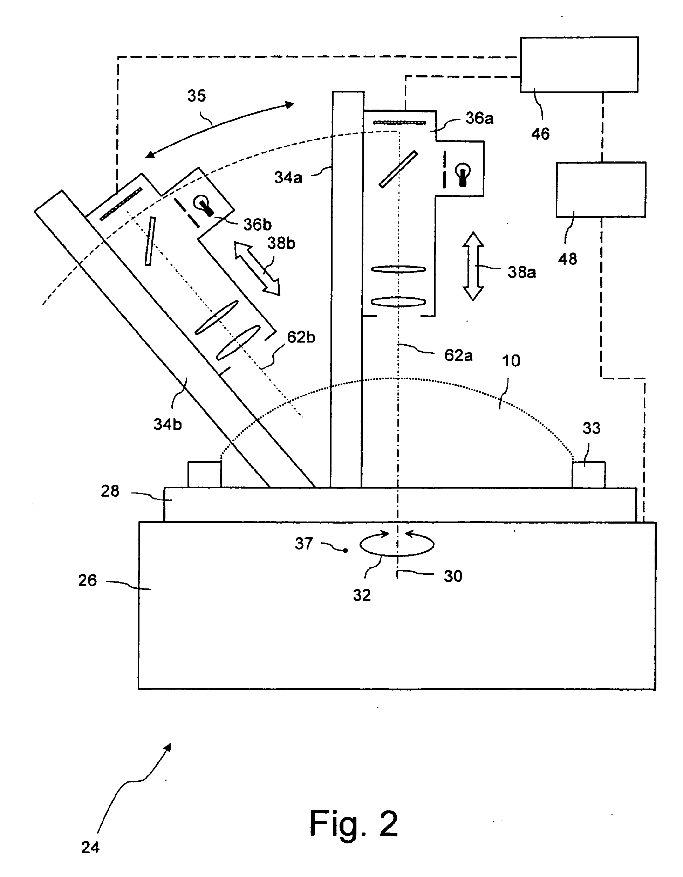

Die Figur 2 zeigt eine insgesamt mit 24 bezeichnete Meßvorrichtung, mit der sich die Lage der Asphärenachse 20 bezüglich einer Bezugsachse bestimmen läßt. Die Meßvorrichtung 24 weist eine Basis 26 auf, auf der ein Drehtisch 28 um eine Drehachse 30 drehbar angeordnet ist. Die Drehbarkeit ist in der Figur 2 durch einen Doppelpfeil 32 angedeutet. Mit Hilfe von lediglich schematisch angedeuteten Befestigungsklemmen 33 kann die hier nur punktiert dargestellte Linse 10 auf dem Drehtisch 28 zentriert und befestigt werden. Vorzugsweise sind die Befestigungsklemmen 33 so ausgebildet, daß sie nicht die Linse 10 als solche, sondern eine diese aufnehmende Linsenfassung, z.B. die Ringfassung 12, halten kann.

An der Basis 26 ist ein erster Ständer 34a befestigt, an dem ein erster Autokollimator 36a gehalten ist. Bei dem dargestellten Ausführungsbeispiel ist der erste Autokollimator 36a entlang seiner optischen Achse an dem ersten Ständer 34a verfahrbar, wie dies in der Figur 2 durch einen Doppelpfeil 38a angedeutet ist. Ein zweiter Ständer 34b ist derart an der Basis 26 befestigt, daß er um eine horizontale Achse 37 verschwenkt werden kann, wie dies durch einen Doppelpfeil 35 angedeutet ist. An dem zweiten Ständer 34b ist ein zweiter Autokollimator 36b befestigt, der ebenfalls entlang seiner optischen Achse verfahrbar ist, was in der Figur 2 durch einen Doppelpfeil 38b angedeutet ist.

Der erste Autokollimator 36a und der zweite Autokollimator 36b sind über nicht näher bezeichnete Datenleitungen mit einer Auswerteeinrichtung 46 verbunden. Von einer Zentralsteuerung 48, die den Drehtisch 28 ansteuert, sind der Auswerteeinrichtung 46 Informationen über den momentanen Drehwinkel des Drehtischs 28 zuführbar.

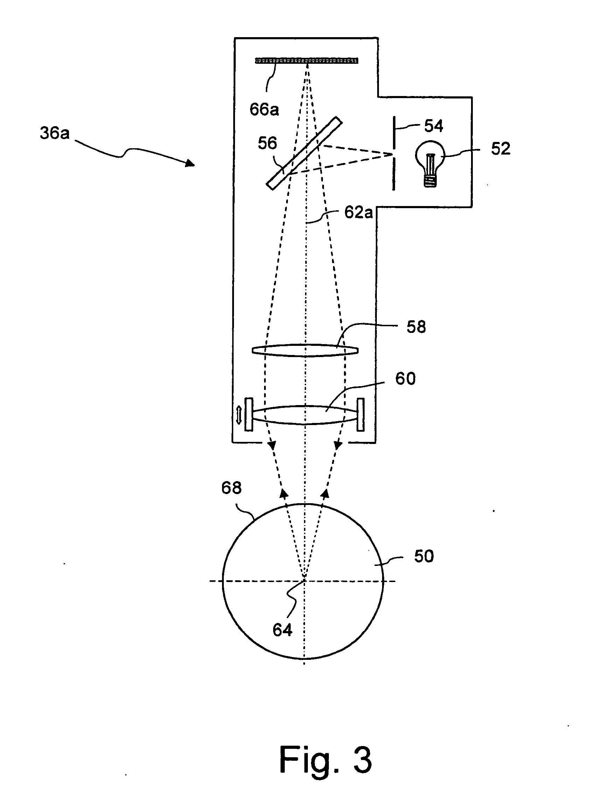

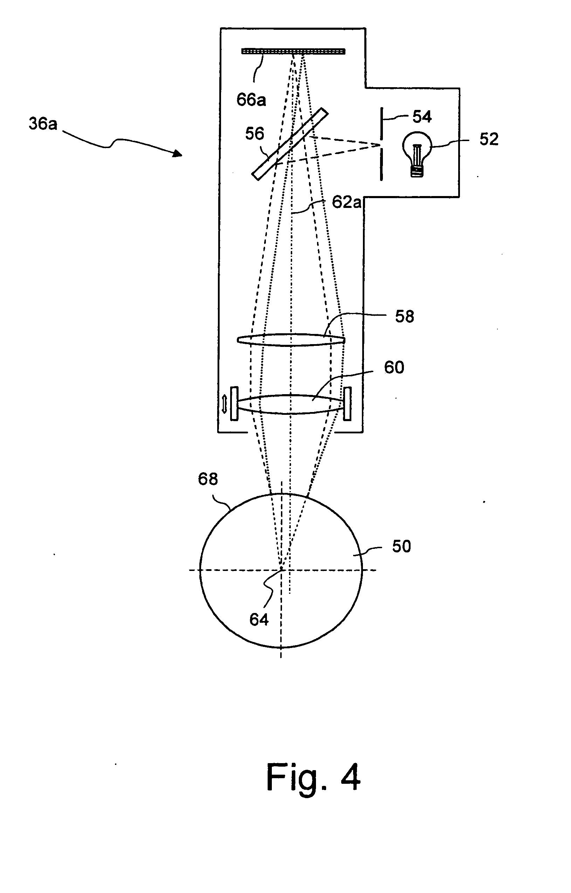

Im folgenden wird die Funktion der Autokollimatoren 36a, 36b mit Bezug auf die Figuren 3 und 4 näher erläutert.

Die Figur 3 zeigt den ersten Autokollimator 36a in einer Meßposition über einem hier als kugelförmig angenommenen Meßobjekt 50. Der erste Autokollimator 36a enthält eine Lichtquelle 52, die eine Lochblende 54 ausleuchtet. Das aus der Lochblende 54 austretende Licht wird über einen Strahlteiler 56 auf eine Kollimatorlinse 58 gerichtet und verläßt dieses als paralleles Strahlenbündel. Eine entlang der optischen Achse 62a verfahrbare Zoomlinse 60 bündelt das parallele Licht in einem Brennpunkt 64. Im Brennpunkt 64 liegt somit das Bild der Lochblende 54. Wird anstelle der Lochblende 54 eine Blende mit einer anders geformten Öffnung, z.B. einer Kreuzschlitzöffnung, gewählt, so entsteht in der Brennebene der Zoomlinse 60 ein Bild des Kreuzschlitzes,

Wird das aus dem ersten Autokollimator 36a austretende Licht an einer optischen Grenzfläche reflektiert, so durchtritt es die Zoomlinse 60 und die Kollimatorlinse 58 in umgekehrter Richtung. Ein Teil des reflektierten Lichts durchtritt den Strahlteiler 56 und trifft auf einen Bildsensor 66a, worunter hier ein lichtempfindlicher ortsauflösender Sensor verstanden wird. Geeignet als Bildsensoren sind beispielsweise an sich bekannte CCD-Sensoren oder CMOS-Sensoren.

Wird der erste Autokollimator 36a so gegenüber dem kugelförmigen Meßobjekt 50 ausgerichtet, daß der Brennpunkt 64 mit dem Krümmungsmittelpunkt des Meßobjekts zusammenfällt, so treffen die Lichtstrahlen senkrecht auf die Oberfläche 68 des Meßobjekts 50 auf. Der reflektierte Anteil des Lichts wird somit in sich zurückgeworfen, wodurch in der Ebene des Bildsensors 66a auf der optischen Achse 62a ein Bild des Brennpunkts 64 entsteht.

Wird das Meßobjekt 50 aus der in der Figur 3 gezeigten Meßposition geringfügig in einer Richtung senkrecht zur optischen Achse 62a verlagert, wie dies in der Figur 4 gezeigt ist, so treffen die Lichtstrahlen nicht mehr senkrecht auf die Oberfläche 68 des Meßobjekts 50 auf. Dadurch werden die Lichtstrahlen nicht mehr in sich zurückreflektiert, so daß das Bild des Brennpunkts 64 auf dem Bildsensor 66a auch nicht mehr auf der optischen Achse 62a, sondern versetzt hierzu liegt. Je weiter das Meßobjekt 50 senkrecht zur optischen Achse 62a verlagert wird, desto weiter wandert das Bild des Brennpunkts 64 auf dem Bildsensor 66a nach außen. Der erste Autokollimator 36a ermöglicht es somit, den Krümmungsmittelpunkt des Meßobjekts 50 zu messen. Aus den vorstehenden Erläuterungen ergibt sich, daß der Autokollimator 36a auch als Instrument zur Messung der Neigung einer (teilweise) reflektierenden Oberfläche, hier der Oberfläche 68 des Meßobjektivs 50, verwendet werden kann.

Der Autokollimator 36a kann selbstverständlich in vielfältiger Weise abgewandelt werden. Anstelle eines Strahlteilers 56 kann beispielsweise eine geometrische Aufteilung des Strahlenganges zwischen dem aus dem Autokollimator 36a austretenden und dem eintretenden Licht erreicht werden, wie dies an sich im Stand der Technik bekannt ist. Falls wie hier der gesamte Autokollimator 36a entlang seiner optischen Achse 62a verfahrbar angeordnet ist, so kann die Zoomlinse 60 auch durch eine feststehende Sammellinse ersetzt werden. In diesem Fall kann die Kollimatorlinse 58 und diese Sammellinse auch in einer einzigen Linse mit positiver Brechkraft vereinigt werden.

Der zweite Autokollimator 36b entspricht in Aufbau und Funktion dem vorstehend beschriebenen ersten Autokollimator 36a.

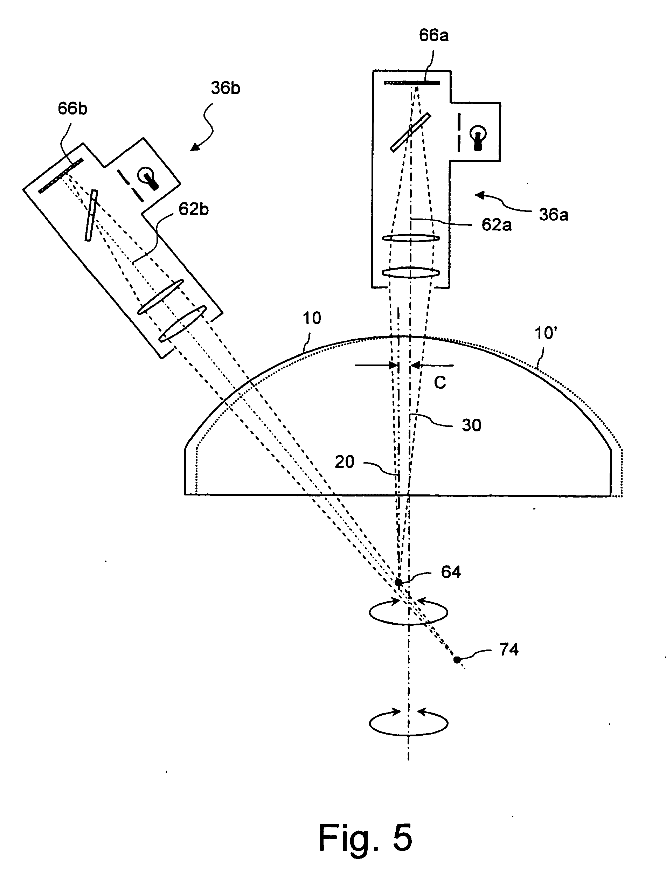

Im folgenden wird die Funktionsweise der Meßvorrichtung 24 mit Bezug auf die Figuren 5 bis 7 erläutert.

Die Figur 5 zeigt aus Gründen der besseren Übersichtlichkeit lediglich die beiden Autokollimatoren 36a, 36b der Meßvorrichtung 24 in ihrer relativen Lage zu der mit durchgezogener Linie dargestellten Linse 10, die auf dem (in der Figur 5 nicht dargestellten) Drehtisch 28 befestigt ist. Wie bereits erwähnt, kann dabei die Linse 10 mit ihrer Linsenfassung auf dem Drehtisch befestigt sein. Der Einfachheit halber sei hier zunächst angenommen, daß die Asphärenachse 20 exakt parallel, aber mit einem Versatz C zur Drehachse 30 des Drehtischs 28 ausgerichtet ist. Die Drehachse 30 stellt hier eine Bezugsachse dar, deren Lage mit hoher Genauigkeit bekannt ist.

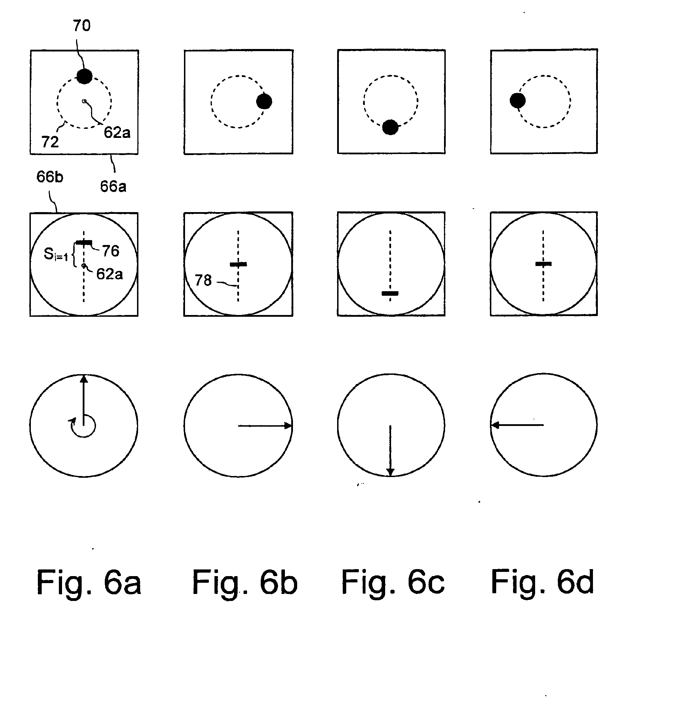

Die optische Achse 62a des ersten Autokollimators 36a verläuft koaxial zur Drehachse 30 des Drehtischs 28. Wird nun durch Verfahren des gesamten Autokollimators 36a entlang der optischen Achse 62a und/oder durch Verstellen der Zoomlinse 60 des ersten Autokollimators 36a dessen Brennpunkt 64 in den Krümmungsmittelpunkt des sphärischen Anteils der Linse 10 gelegt, so sind die optischen Verhältnisse an der asphärischen Linsenfläche 16 ähnlich wie bei der in der Figur 4 gezeigten Meßposition. Durch die Dezentrierung der Asphärenachse 20 relativ zu der Drehachse 30 liegt das Bild des Brennpunkts 64 auf dem Bildsensor 66a nicht auf der optischen Achse 62a, sondern versetzt hierzu. In der Figur 6a ist dieses Bild auf dem Bildsensor 66a in der oberen Abbildung durch einen schwarzen, mit der Bezugsziffer 70 bezeichneten Punkt angedeutet. Der Ort des Bildpunktes 70 wird von dem Bild- sensor 66a an die Auswerteeinrichtung 46 übermittelt.

Es sei nun angenommen, daß die Linse 10 auf dem Drehtisch 28 um 90° gedreht wird, wie dies in der Figur 6b in der unteren Abbildung durch einen entsprechend gedrehten Pfeil angedeutet ist. Während der Drehung wandert der Bildpunkt 70 auf der in der oberen Abbildung der Figur 6a gestrichelt angedeuteten Linie 72 um die optische Achse 62a herum, bis er schließlich den in der Figur 6b in der oberen Abbildung dargestellten Ort erreicht. Nach einer weiteren Drehung um 90° nimmt die Linse 10 die in der Figur 5 gepunktet dargestellte und mit 10' bezeichnete Lage ein, während der Bildpunkt 70 auf dem Sensor 66a weiter auf dem Kreis 72 an den in der Figur 6c in der oberen Abbildung gezeigten Ort wandert. Nach einer weiteren Drehung um 90° nimmt der Bildpunkt 70 den in der Figur 6d in der oberen Abbildung gezeigten Ort ein. Eine letzte Drehung um 90° läßt den Bildpunkt 70 wieder an den ursprünglichen, in der Figur 6a in der oberen Abbildung gezeigten Ausgangsort zurückkehren.

Wenn die optische Achse 62a des ersten Autokollimators 36a exakt entlang der Drehachse 30 des Drehtischs 28 ausgerichtet ist, so würde im Prinzip die Messung bei einem einzigen Drehwinkel genügen, um aus der Lage des Bildes 70 die Lage des Krümmungsmittelpunktes des sphärischen Anteils relativ zu der Drehachse 30 zu bestimmen. Fluchtet die optische Achse 62a des ersten Autokollimators 36a jedoch nicht exakt mit der Drehachse 30 des Drehtischs 28, so würde bei einer einzigen Messung ein mit dem geringen Versatz einhergehender Meßfehler unentdeckt bleiben.

Führt man die Messung jedoch wie beschrieben in mehreren unterschiedlichen Drehwinkelpositionen der Linse 10 durch, so läßt sich ein solcher geringfügiger Versatz an den Meßwerten dadurch erkennen, daß der Kreis 72 nicht bezüglich der optischen Achse 62a des ersten Autokollimators 36a zentriert ist. Zur Bestimmung der Lage des Krümmungsmittelpunktes des sphärischen Anteils der asphärischen Linsenfläche 16 wird deswegen die Lage des Bildpunktes 70 relativ zum Mittelpunkt des Kreises 72 (und nicht relativ zur optischen Achse 62a) ausgewertet.

Allein mit dem ersten Autokollimator 36a ist es jedoch nicht möglich festzustellen, ob die Asphärenachse 20 nicht zusätzlich zur Dezentrierung eine Verkippung gegenüber der Drehachse 30 aufweist. Um dies erkennen und ggf. den Kippwinkel $\beta$ bestimmen zu können, wird während der Drehung der Linse 10 auf dem Drehtisch 28 eine Messung mit Hilfe des zweiten Autokollimators 36b durchgeführt.

Da die optische Achse 62b des zweiten Autokollimators 36b um einen Winkel $\alpha$ geneigt zur optischen Achse 62a des ersten Autokollimators 36a angeordnet ist, überstreicht während der Drehung der Linse 10 ein ringflächenförmiger Ausschnitt der asphärischen Linsenfläche 16 das Meßfenster des zweiten Autokollimators 36b. Die Größe dieses Meßfensters wird dabei durch den Querschnitt des aus dem zweiten Autokollimator 36b austretenden Lichtbündels bestimmt. Der Brennpunkt 74 des zweiten Autokollimators 36b wird nun zunächst durch Verfahren des gesamten Autokollimators 36b entlang der optischen Achse 62b und/oder durch Verstellen der Zoomlinse 60 des zweiten Autokollimators 36b so eingestellt, daß er im lokalen Krümmungsmittelpunkt des ringflächenförmigen Ausschnitts der asphärischen Linsenfläche 16 liegt. Im allgemeinen liegt dieser Krümmungsmittelpunkt nicht auf der Asphärenachse 20.

Der innerhalb des Meßfensters liegende Ausschnitt des ringflächenförmigen Bereichs hat im wesentlichen die Wirkung einer Zylinderlinse, da sich das Oberflächenprofil in azimutaler Richtung nicht verändert. Daher entsteht in der Brennebene kein punktförmiges, sondern ein strichförmiges Bild der punktförmigen Öffnung der Lochblende 54. Dementsprechend ist auch das Bild auf dem Bildsensor 66b des zweiten Autokollimators 36b strichförmig. In der mittleren Abbildung der Figur 6a ist dieses strichförmige Bild mit 76 bezeichnet.

Wird die Linse 10 um 90° gedreht, so wandert das strichförmige Bild 76 auf einer die optische Achse 62a schneidenden Linie entlang, die in der mittleren Abbildung der Figur 6b mit 78 bezeichnet ist. Daß es hier nicht zu einer kreisförmigen Bewegung des Bildes 76 wie bei dem ersten Autokollimator 36a kommt, liegt an der bereits erwähnten Tatsache, daß innerhalb des Meßfensters die Linsenfläche 16 im wesentlichen die Wirkung einer Zylinderlinse hat, die während einer Drehung der Linse 10 hin und her wandert.

Bei Fortsetzung der Drehung der Linse 10 wandert das strichförmige Bild 76 auf der Linie 78 bis auf die gegenüberliegender Seite und kehrt nach einer Drehung der Linse 10 um insgesamt 360° wieder an seinen Ausgangsort zurück.

Der in den mittleren Abbildungen der Figuren 6a bis 6d gezeigte Verlauf ergibt sich nur, wenn die Asphärenachse 20 dezentriert, aber nicht verkippt zur Drehachse 30 verläuft, wie dies in der Figur 5 angenommen ist. Die von dem ersten Autokollimator 36a gelieferten Meßwerte liefern den Ort des Krümmungsmittelpunkts des sphärischen Anteils der Linsenfläche 16. Da die Asphärenachse 20 diesen Krümmungsmittelpunkt enthält und die Messung durch den zweiten Autokollimator ergeben hat, daß keine Verkippung vorliegt, ist die Lage der Asphärenachse 20 bezüglich der Drehachse 30 sofort ableitbar.

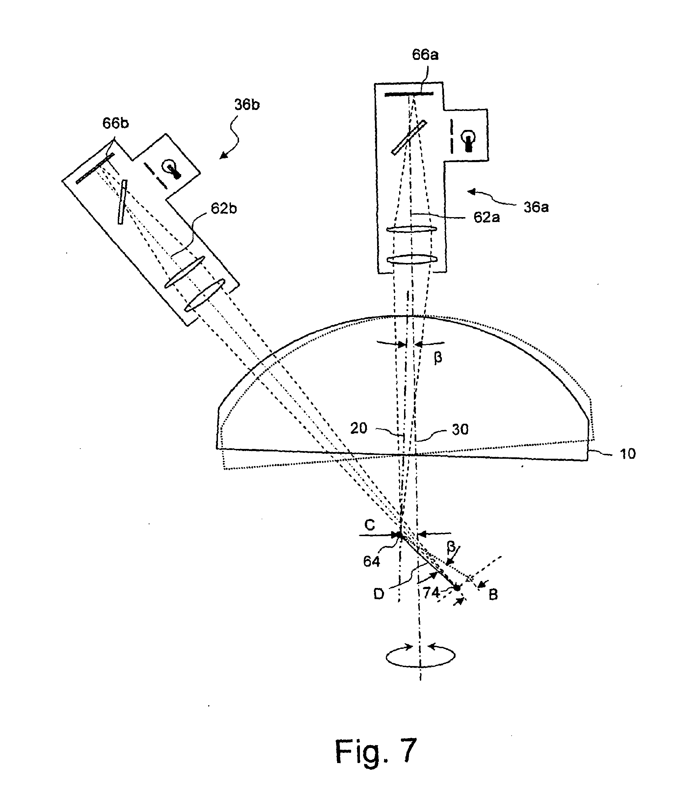

Ist die Asphärenachse 20 jedoch relativ zur Drehachse 30 um einen Winkel β verkippt, wie dies in der Figur 7 gezeigt ist, so bleibt das von dem Sensor 66a des ersten Autokollimators 36a erfaßte Bild weitgehend gleich, während das von dem Sensor 66b des zweiten Autokollimators 36b erfaßte Bild während der Drehung des Drehtischs 30 stärker abweicht. Das strichförmige Bild 76 bewegt sich dann zwar nach wie vor auf einer Linie 78 über den Sensor 66b, jedoch gibt es Abweichungen bezüglich der Amplitude und der Phase dieser "Schwingung" des strichförmigen Bildes 76 auf der Linie 78.

Im folgenden wird erläutert, wie man aus dieser "Schwingung" und dem mit Hilfe des ersten Autokollimators 36a ermittelten Krümmungsmittelpunkt des sphärischen Anteiles die Lage einer relativ zu der Drehachse 30 verkippten Asphärenachse 20 bestimmen kann.

Analytische Berechnungen ergeben für die von dem Sensor 66b erfaßte Auslenkung $S_1$ des strichförmigen Bildes 76 folgende Gleichung:

$$S_1 = C \cdot \cos(\alpha) \cdot \cos(A_i + \Delta) + B \cdot \cos(\alpha) \cdot \cos(A_1 + \delta) \qquad (1)$$

Dabei bezeichnet

$A_i$ den Drehwinkel des Drehtisches 30 bei der i-ten Messung,

C den vom ersten Autokollimator 36a gemessenen radialen Abstand zwischen dem Krümmungsmittelpunkt des sphärischen Anteils von der Drehachse 30,

$\Delta$ den vom ersten Autokollimator 36a gemessenen Azimutwinkel des Krümmungsmittelpunkts des sphärischen Anteils bezüglich der Drehachse 30,

$\delta$ den Azimutwinkel zwischen der Asphärenachse 20 und der Drehachse 30,

D den Abstand zwischen dem von dem ersten Autokollimator 36a gemessenen ersten Krümmungsmittelpunkt des sphärischen Anteils und dem von dem zweiten Autokollimator gemessenen lokalen Krümmungsmittelpunkt (d.h. Brennpunkt 74),

B die Amplitude, mit welcher der vom zweiten Autokollimator 36b gemessene lokale Krümmungsmittelpunkt (d.h. Brennpunkt 74) drehwinkelabhängig bei der Drehung der Linse 10 infolge der Neigung der Asphärenachse 20 ausgelenkt wird, und

$\alpha$ den Winkel des zweiten Autokollimators 36b bezüglich der Drehachse 30. Der Winkel $\alpha$ wird durch Verstellen des zweiten Ständers 34b vorgegeben und sollte so gewählt sein, daß die Auslenkung des strichförmigen Bildes 76 auf dem Sensor 66b möglichst groß ist, ohne daß jedoch das Sensorfeld verlassen wird.

Die Größen $A_i$ und $\alpha$ können unmittelbar an der Meßvorrichtung abgelesen werden. Die Größe $S_i$ liefert der zweite Autokollimator 36b, die Größen $\Delta$ und C werden aus den von dem ersten Autokollimator 36a erhaltenen Meßwerten in der oben geschilderten Weise abgeleitet. Stellt man die Gleichung (1) so um, daß alle ermittelbaren Größen auf einer Seite stehen, so erhält man die Gleichung (2):

$$B \cdot \cos(A_1 + \delta) = (S_1 - C \cdot \cos(\alpha) \cdot \cos(A_i + \Delta)) / \cos(\alpha) \qquad (2)$$

Trägt man die rechte Seite der Gleichung (2) für alle Messungen i = 1, 2, 3, ... auf und verbindet die Werte durch eine Fit-Kurve, so ergibt sich eine Sinusfunktion, aus der sich die unbekannten Werte B und $\delta$ ableiten lassen.

Aus den Werten für B und $\delta$ läßt sich der Kippwinkel β bestimmen. Für die Projektionen $\beta_x$, $\beta_y$ des Kippwinkels β in der X-Z-Ebene bzw. Y-Z-Ebene ergibt sich:

$$\beta_x = \arctan(B \cdot \cos(\delta)/D)$$
$$\beta_y = \arctan(B \cdot \sin(\delta)/D) \tag{3}$$

In kartesischen Koordinaten ergibt sich als Ort des Krümmungsmittelpunktes des sphärischen Anteils

$$C_x = C \cdot \cos(\Delta)$$
$$C_y = C \cdot \sin(\Delta) \tag{4}$$

Damit ist die Lage der Asphärenachse 20 vollständig bestimmt.

Soll die Lage der Asphärenachse 20 nicht relativ zu der Drehachse 30, sondern z.B. relativ zu der Symmetrieachse 22 des Linsenrandes 18 bestimmt werden, so muß noch die Lage der Symmetrieachse 22 des Linsenrandes 18 relativ zu der Drehachse 30 bestimmt werden. Hierfür genügt es, den Linsenrand 18 mit Hilfe eines Meßtasters relativ zu dem Drehtisch 28 (bzw. dessen Drehachse 30) zu vermessen.

Günstig ist es, wenn die Linse 10 während des Meßvorgangs in einer Linsenfassung aufgenommen ist, die eine einfache Lagejustierung der Linse 10 in der Linsenfassung ermöglicht. Die Linse 10 wird dann in ihrer Linsenfassung, bei der es sich z.B. um Ringfassung 12 wie in der Figur 1 gezeigt handeln kann, auf dem Drehtisch 28 befestigt. Nach Durchführung der Lagebestimmung der Asphärenachse 20 wird die Linse 10 dann so lange in der Linsenfassung justiert, bis man eine Übereinstimmung der Lage der Asphärenachse 20 mit ihrer Solllage vermutet. Diese Übereinstimmung kann dann durch eine weitere Messung verifiziert werden, die wie vorstehend erläutert durchgeführt wird. Werden weiterhin nicht tolerierbare Abweichungen der Asphärenachse 29 von der Solllage festgestellt, so müssen die Justierung der Linse 10 in der Linsenfassung und die Verifikationsmessung (ggf. sogar mehrfach) wiederholt werden.

Das vorstehend beschriebene Verfahren und auch die dafür verwendete Meßvorrichtung 24 lassen sich in vielfältiger Weise abwandeln: Verschwenkt man nach Durchführung der vorstehend beschriebenen Messung den zweiten Ständer 34b relativ zu der Basis 26 um die horizontale Drehachse, wie dies in der Figur 2 durch den Doppelpfeil 35 angedeutet ist, so wird der Winkel α zwischen der optischen Achse des zweiten Autokollimators 36b und der Drehachse 30 verändert. Führt man bei diesem anderen Winkel α eine weitere Messung in der vorstehend beschriebenen Weise durch, so läßt sich ein zweiter Meßwert für die Lage der Asphärenachse gewinnen. Dies führt zu einer Verringerung meßstatistischer Fehlergrenzen, die um so kleiner werden, je mehr Meßvorgänge bei verschiedenen Winkeln α durchgeführt werden. Insbesondere bei sehr schwach gekrümmten asphärischen Linsen kann die Wiederholung der Messung bei verschiedenen Winkeln α notwendig sein, um eine ausreichend hohe Meßgenauigkeit erzielen zu können.

Erhöht man den Aufwand für eine exakte Ausrichtung der optischen Achse 62a des ersten Autokollimators 36a zur Drehachse 30, so genügt bei gleicher Meßgenauigkeit die Messung bei einem einzigen Drehwinkel A, um gemäß der Gleichung (2) die Lage des Krümmungsmittelpunktes des sphärischen Anteils zu ermitteln.

Bei einer anderen Abwandlung wird auf den ersten Ständer 34a mit dem ersten Autokollimator 36a verzichtet. Die Rolle des ersten Autokollimators 36a übernimmt dann der zweite Autokollimator 36b, nachdem dieser in die vertikale Position verschwenkt wurde. Diese kostengünstigere Variante erfordert allerdings die doppelte Meßzeit, da die beiden Messungen nicht gleichzeitig, sondern hintereinander durchgeführt werden müssen. Ferner wird zusätzliche Zeit für das Verschwenken und Nachjustieren des zweiten Ständers 34b benötigt.

Bei Linsen mit zwei asphärischen Linsenflächen können diese gleichzeitig vermessen werden, wenn zwei weitere Autokollimatoren unterhalb der zu vermessenden Linse angeordnet werden. Die beiden weiteren Autokollimatoren werden dabei in der gleichen Weise wie die Autokollimatoren 36a, 36b, jedoch an der Ebene des Drehtischs gespiegelt angeordnet. Dies erfordert selbstverständlich eine andere Auslegung der Basis 26 sowie des Drehtischs 28.

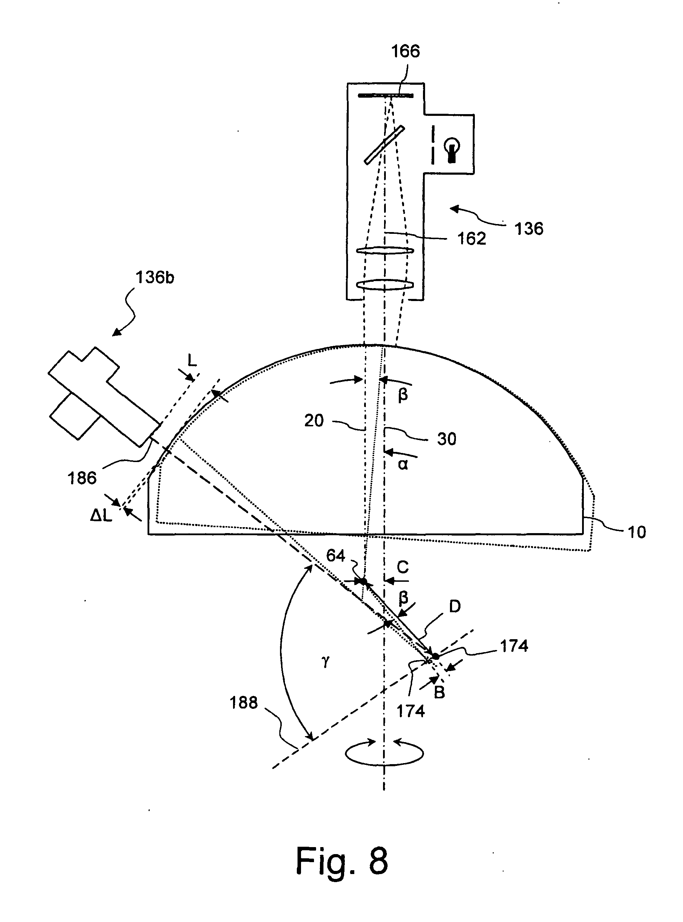

Die Figur 8 zeigt in einer an die Figuren 5 und 7 angelehnten Darstellung ein weiteres Ausführungsbeispiel für eine insgesamt mit 124 bezeichnete Meßvorrichtung. Weitere, in der Figur 8 nicht gezeigte Teile der Meßvorrichtung 124 wie z. B. eine Basis 26, ein Drehtisch 28, Befestigungsklemmen 33 und Ständer 34a, 34b sind der Übersichtlichkeit halber in der Figur 8 nicht gezeigt, entsprechen in ihrer grundsätzlichen Anordnung jedoch dem in der Figur 2 gezeigten Ausführungsbeispiel. Teile der Meßvorrichtung 124, die Teilen der oben beschriebenen Meßvorrichtung 24 entsprechen, sind mit um 100 erhöhten Bezugsziffern bezeichnet und werden im Folgenden nicht nochmals näher erläutert.

Die Meßvorrichtung 124 unterscheidet sich von der vorstehend beschriebenen Meßvorrichtung 24 im wesentlichen dadurch, daß der zweite Autokollimator 36b durch einen Abstandssensor 136b ersetzt ist. Auch der Abstandssensor 136b ist, z. B. mit Hilfe eines nicht gezeigten verschwenkbaren Ständers, um eine horizontale Achse verschwenkbar, so daß der Winkel zwischen einer Meßrichtung 186 und der Drehachse 30 verändert werden kann.

Als Abstandssensor 136b kommen im Prinzip alle hoch genauen berührungsfreien oder aber auch taktilen Abstandssensoren in Betracht, wie sie im Stand der Technik bekannt sind. Die Verwendung taktiler Berührungssensoren kann beispielsweise dann vorteilhaft sein, wenn die zu vermessende Linse mit einer emulsionsartigen Schutzschicht überzogen ist, deren Dicke variiert und deswegen durchdrungen werden muß, um Meßfehler zu vermeiden. Bei Linsen, die bereits zur Verringerung von Reflexen in geeigneter Weise beschichtet sind, empfiehlt sich im Allgemeinen wegen der hochempfindlichen Beschichtungen eine berührungslose Abstandsmessung. Besonders geeignet hierfür sind beispielsweise optische Weißlicht-Meßsysteme, bei denen die chromatische Aberration eines Objektivs ausgenutzt wird. Beschrieben sind derartige Meßsysteme beispielsweise in einem Aufsatz von C. Dietz und M. Jurca mit dem Titel "Eine Alternative zum Laser", Sensormagazin Nr. 4, 3. November 1997, Seiten 15-18.

Die Vermessung der Taumelbewegung der Linse 10 während ihrer Drehung um die Drehachse 30 erfolgt im Prinzip in der gleichen Weise, wie dies weiter oben für die Meßvorrichtung 24 gemäß dem ersten Ausführungsbeispiel beschrieben wurde. Zunächst wird der Abstandssensor 136b so ausgerichtet, daß seine Meßrichtung 186 senkrecht auf einem Flächenelement der Linse 10 steht und auf einen bestimmten Punkt 174 in der Linse 10 gerichtet ist, dessen Abstand zu dem Krümmungsmittelpunkt 64 des sphärischen Anteils aus den Designdaten der Linse 10 bekannt ist. Bei der oben beschriebenen Meßvorrichtung 24 entsprach dieser Punkt 174 dem von dem zweiten Autokollimator 36b erfaßten lokalen Krümmungsmittelpunkt 74.

In der Figur 8 ist die Linse 10 in einer unverkippten Stellung (Kippwinkel $\beta = 0°$) dargestellt. Unterstellt man nun eine Verkippung der Linse 10 um einen Winkel $\beta \neq 0°$, wobei hier der Einfachheit halber die Kippachse durch den Krümmungsmittelpunkt 64 des sphärischen Anteils der Linse 10 verläuft, so wandert der Punkt 174 entlang einer Bewegungsrichtung 188 an eine Position 174'. Gleichzeitig verändert sich der Abstand L zwischen dem Abstandssensor 136b und der Oberfläche der Linse 10. Die Amplituden der Bewegung des Punkts 174 einerseits und der Oberfläche 10 entlang der Meßrichtung 186 andererseits sind unterschiedlich, da die Meßrichtung 186 und die Bewegungsrichtung 188 nicht zueinander parallel sind. Aus der Figur 8 ergibt sich, daß die Auslenkung $\Delta L$ der Oberfläche der Linse 10 entlang der Meßrichtung 186 durch die Gleichung (5) gegeben ist:

$$\Delta L = B \cdot \cos(\gamma) \qquad\qquad (5)$$

Der Winkel $\gamma$ ist dabei der Winkel zwischen der Bewegungsrichtung 188 und der Meßrichtung 186.

Ähnlich wie der zweite Autokollimator 36b in dem oben beschriebenen Ausführungsbeispiel erfaßt auch der Abstandssensor 136b sowohl die Abstandsänderungen, die durch die Dezentrierung der Linse hervorgerufen sind, als auch solche Abstandsänderungen, die auf die Verkippung der Symmetrieachse 20 zurückgehen. Das von dem Abstandssensor 136b erzeugte Meßsignal $S_i$ enthält deswegen wieder zwei Beiträge, für die sich nach analytischer Rechnung ergibt:

$$S_i = C \cdot \cos(\alpha) \cdot \cos(A_i + \Delta) + D \cdot \tan(\beta) \cdot \cos(\gamma) \cdot \cos(A_i + \delta) \qquad (6)$$

Dabei ist

$$B = D \cdot \tan(\beta) \qquad\qquad (7)$$

Die Größen C, D, $\Delta$, $\alpha$, $A_1$ und $\delta$ sind dabei genauso definiert, wie dies weiter oben zu dem ersten Ausführungsbeispiel erläutert wurde.

Das Umstellen der Gleichung (6) ähnlich wie oben bei der Gleichung (2) ergibt die Gleichung (8):

$$B \cdot \cos(\gamma) \cdot \cos(A_i + \delta) = S_i - C \cdot \cos(\alpha) \cdot \cos(A_i + \Delta)) \qquad (8)$$

Die rechts in der Gleichung (8) stehenden Größen ergeben sich aus der Messung. Eine gemäß Gleichung (9) vorgegebene Fitkurve

$$F_{ampl} = B \cdot \cos(\gamma) \qquad\qquad (9)$$

liefert den Azimutwinkel $\delta$ zwischen der Asphärenachse 20 und der Drehachse 30. Gleichsetzen der Amplitude $F_{ampl}$ mit $B \cdot \cos(\gamma)$ liefert die Gleichung (10):

$$\beta = \arctan(F_{ampl})/(D \cdot \cos(\gamma)) \qquad\qquad (10)$$

Die Projektionen des Kippwinkels in die x-z und y-z-Ebenen ergeben sich wieder gemäß Gleichung (3).
Die oben zu der Meßvorrichtung 24 erläuterten Varianten sind entsprechend auch auf die Meßvorrichtung 124 übertragbar. In diesem Fall ist lediglich der zweite Autokollimator 36b durch den Abstandssensor 136b zu ersetzen.

## Patentansprüche

1. Verfahren zur Bestimmung der Lage einer Symmetrieachse (20) einer asphärischen Linsenfläche (16) relativ zu einer Bezugsachse (30, 22), mit folgenden Schritten:

   a) Messen der Lage des Krümmungsmittelpunktes (21) des sphärischen Anteils der Linsenfläche (16) ;
   b) Messen einer Taumelbewegung, welche die Linsenfläche (16) während einer Drehung um eine Drehachse (30) beschreibt;
   c) Ermitteln der Lage der Symmetrieachse (20) der asphärischen Linsenfläche (16) relativ zu der Drehachse (30) aus den in den Schritten a) und b) bestimmten Meßwerten,

   **dadurch gekennzeichnet, dass**
   in Schritt b) die Taumelbewegung auch dann ermittelt wird, wenn sich der Krümmungsmittelpunkt (21), dessen Lage in Schritt a) gemessen wird, außerhalb der Drehachse (30) befindet.

2. Verfahren nach Anspruch 1, **dadurch gekennzeichnet, daß** zur Messung der Taumelbewegung in Schritt b) die Neigung eines radialen Profils der Linsenfläche (16) in verschiedenen Drehstellungen der Linse (16) gemessen wird.

3. Verfahren nach Anspruch 2, **dadurch gekennzeichnet, daß** die Messung der Taumelbewegung in Schritt b) folgende Schritte umfaßt:

   b1) Bestimmen der Neigung des radialen Profils der Linsenfläche (16) in einem Bereich der Linsenfläche (16), der innerhalb eines Meßfensters liegt;
   b2) Verdrehen der Linsenfläche (16) um die Drehachse (30), so daß ein anderer Bereich der Linsenfläche (16) in das Meßfenster gelangt;
   b3) Bestimmen der Neigung des radialen Profils der Linsenfläche (16) in dem anderen Bereich der Linsenfläche;

4. Verfahren nach Anspruch 1, **dadurch gekennzeichnet, daß** zur Messung der Taumelbewegung in Schritt b) der Abstand eines radialen Profils der Linsenfläche (16) zu einem Bezugsort in verschiedenen Drehstellungen der Linse (16) gemessen wird.

5. Verfahren nach Anspruch 4, **dadurch gekennzeichnet, daß** der Abstand berührungslos gemessen wird.

6. Verfahren nach einem der vorhergehenden Ansprüche, **dadurch gekennzeichnet, daß** die Bezugsachse die Drehachse (30) ist.

7. Verfahren nach einem der Ansprüche 1 bis 5, **dadurch gekennzeichnet, daß** die Lage der Bezugsachse (22) relativ zu der Drehachse (30) bekannt ist, und daß die Lage der Symmetrieachse (20) relativ zu der Bezugsachse (22) aus der Lage der Symmetrieachse (22) relativ zu der Drehachse (30) einerseits und der Lage der Bezugsachse (22) relativ zu der Drehachse (30) andererseits bestimmt wird.

8. Verfahren nach einem der vorhergehenden Ansprüche, **dadurch gekennzeichnet, daß** während der Drehung der Linse (16) in Schritt b) die Linsenfläche (16) um insgesamt 360° um die Drehachse (30) gedreht wird.

9. Verfahren nach einem der vorhergehenden Ansprüche, **dadurch gekennzeichnet, daß** während der Messung der Taumelbewegung in Schritt b) der Schritt a) zumindest einmal wiederholt wird.

10. Verfahren nach einem der vorhergehenden Ansprüche, **dadurch gekennzeichnet, daß** zur Bestimmung der Lage des Krümmungsmittelpunktes (21) in Schritt a) ein erster Autokollimator (36a) verwendet wird, dessen bildseitiger Brennpunkt (64) in den Krümmungsmittelpunkt (21) des sphärischen Anteils der Linsenfläche (16) gebracht wird.

11. Verfahren nach einem der Ansprüche 2 oder 3, **dadurch gekennzeichnet, daß** zur Bestimmung der Neigung ein zweiter Autokollimator (36b) verwendet wird, dessen bildseitiger Brennpunkt (64) in den Krümmungsmittelpunkt (21) des im Meßfenster liegenden Bereichs gebracht wird.

12. Verfahren nach Anspruch 10 und nach einem der Ansprüche 2 oder 3, **dadurch gekennzeichnet, daß** die Bestimmung der Lage des Krümmungsmittelpunktes (21) in Schritt a) und die Bestimmung der Neigung in Schritt b) mit einem einzigen Autokollimator (36a) durchgeführt wird, der zwischen den Schritten a) und b) um eine horizontale Achse (37) verschwenkt wird.

13. Verfahren nach Anspruch 3, **dadurch gekennzeichnet, daß** die Schritte b1) bis b3) wiederholt werden für weitere Bereiche, die auf einer Linie parallel zu den zunächst vermessenen Bereichen liegen.

14. Verfahren nach Anspruch 11 und nach Anspruch 13, **dadurch gekennzeichnet, daß** vor der Wiederholung der Schritte b1) bis b3) für die weiteren Bereiche der zweite Autokollimator (36b) um eine horizontale Achse (37) verschwenkt wird.

15. Verfahren nach Anspruch 12 und nach Anspruch 13, **dadurch gekennzeichnet, daß** vor der Wiederholung der Schritte b1) bis b3) für die weiteren Bereiche der einzige Autokollimator (36b) um die horizontale Achse (37) verschwenkt wird.

16. Verfahren nach einem der vorhergehenden Ansprüche, **dadurch gekennzeichnet, daß** die Linse (10) während der Schritte a) bis c) in einer Linsenfassung (12) justierbar aufgenommen ist.

17. Verfahren nach Anspruch 16, **dadurch gekennzeichnet, daß** bei Feststellen einer Abweichung der Lage der Symmetrieachse (20) der Linse (10) von einer Solllage die Linse (10) in der Linsenfassung (12) justiert und die Schritte a) bis c) wiederholt werden.

18. Vorrichtung zur Bestimmung der Lage einer Symmetrieachse einer asphärischen Linsenfläche (16) relativ zu einer Bezugsachse (22, 30), umfassend:

   a) einen um eine Drehachse (30) drehbaren Drehtisch (28), auf dem eine die asphärische Linsenfläche (16) tragende Linse (10) anordenbar ist,
   b) eine erste Meßeinrichtung zum Messen der Lage des Krümmungsmittelpunktes (21) des sphärischen Anteils der Linsenfläche (16),
   c) eine nicht notwendigerweise von der ersten Meßeinrichtung verschiedene zweite Meßeinrichtung zum Messen einer Taumelbewegung, welche die Linsenfläche (16) während einer Drehung um eine Drehachse (30) beschreibt, und
   d) eine Auswerteeinrichtung (46), die aus den von der ersten Meßeinrichtung (36a; 136a) gelieferten Meßsignalen und den von der zweiten Meßeinrichtung (36b; 136b) bei verschiedenen Drehwinkeln des Drehtischs (28) gelieferten Meßsignalen die Lage der Symmetrieachse (20) der asphärischen Linsenfläche (16) relativ zu der Drehachse (30) ermittelt,

   **dadurch gekennzeichnet, dass**
   die Auswerteeinrichtung dazu eingerichtet ist, die Lage der Symmetrieachse (20) der asphärischen Linsenfläche (16) relativ zu der Drehachse (30) auch dann zu ermitteln, wenn sich der Krümmungsmittelpunkt (21), dessen Lage von der ersten Meßeinrichtung gemessen wird, außerhalb der Drehachse (30) befindet.

19. Vorrichtung nach Anspruch 18, **dadurch gekennzeichnet, daß** die erste Meßeinrichtung (36a; 136a) einen ersten Autokollimator aufweist, dessen optische Achse (62a) koaxial zur Drehachse (30) ausgerichtet ist und dessen bildseitiger Brennpunkt (64) in unterschiedlichen Längspositionen entlang seiner optischen Achse (62a) positionierbar ist.

**20.** Vorrichtung nach Anspruch 18 oder 19, **dadurch gekennzeichnet, daß** die zweite Meßeinrichtung einen zweiten Autokollimator (36b) aufweist, dessen optische Achse (62b) einen von Null verschiedenen Winkel zu der Drehachse (30) einschließt und dessen bildseitiger Brennpunkt (74) in unterschiedlichen Längspositionen entlang seiner optischen Achse (62b) positionierbar ist.

**21.** Vorrichtung nach Anspruch 20, **dadurch gekennzeichnet, daß** der Winkel zwischen der optischen Achse (62b) des zweiten Autokollimators (36b) und der Drehachse (30) veränderbar ist.

**22.** Vorrichtung nach Anspruch 21, **dadurch gekennzeichnet, daß** der zweite Autokollimator (36b) um eine horizontale Achse (37) verschenkbar ist.

**23.** Vorrichtung nach Anspruch einem der Ansprüche 19 bis 22, **dadurch gekennzeichnet, daß** der Autokollimator (36a, 36b; 136a) ein leuchtendes Urbild erzeugt, das über eine Optik (58, 60) in eine Brennebene abbildbar ist, wobei in die Optik von einem Meßobjekt (10, 50) zurückreflektiertes Licht zumindest teilweise auf einen lichtempfindlichen ortsauflösenden Sensor (66a, 66b) gerichtet wird.

**24.** Vorrichtung nach Anspruch 18 oder 19, **dadurch gekennzeichnet, daß** die zweite Meßeinrichtung einen Abstandssensor (136b) aufweist, mit dem der Abstand zwischen einem Bezugsort und einem radialen Profil der Linsenfläche (16) entlang einer Meßrichtung (186) meßbar ist.

**25.** Vorrichtung nach Anspruch 24, daß der Winkel zwischen der Meßrichtung (186) und der Drehachse (30) veränderbar ist.

**26.** Vorrichtung nach Anspruch 25, **dadurch gekennzeichnet, daß** der Abstandssensor (136b) um eine horizontale Achse (37) verschenkbar ist.

**27.** Vorrichtung nach einem der Ansprüche 18 bis 26, **gekennzeichnet durch**:

a) eine dritte Meßeinrichtung zum Messen der Lage des Krümmungsmittelpunktes des sphärischen Anteils einer der Linsenfläche abgewandten weiteren Linsenfläche, wobei die dritte Meßeinrichtung auf einer der ersten Meßeinrichtung abgewandten Seite des Drehtischs angeordnet ist;
b) eine vierte Meßeinrichtung zum Messen einer Taumelbewegung, welche die weitere Linsenfläche während einer Drehung um die Drehachse beschreibt, wobei die vierte Meßeinrichtung auf einer der ersten Meßeinrichtung abgewandten Seite des Drehtischs angeordnet ist.

**28.** Vorrichtung nach einem der Ansprüche 18 bis 27, **dadurch gekennzeichnet, daß** der Drehtisch (28) eine Halterung zur Befestigung einer Linsenfassung aufweist.

**Claims**

**1.** Method for determining the position of a symmetry axis (20) of an aspherical lens surface (16) relative to a reference axis (30, 22), having the following steps:

a) measuring the position of the centre of curvature (21) of the spherical component of the lens surface (16);
b) measuring a wobble movement which the lens surface (16) describes during rotation about a rotation axis (30);
c) calculating the position of the symmetry axis (20) of the aspherical lens surface (16) relative to the rotation axis (30) from the measurement values determined in steps a) and b),

**characterised in that**
the wobble movement is calculated in step b) even if the centre of curvature (21), the position of which is measured in step a), lies outside the rotation axis (30).

**2.** Method according to Claim 1, **characterised in that** the inclination of a radial profile of the lens surface (16) is measured in different rotation positions of the lens (16) in order to measure the wobble movement in step b).

3. Method according to Claim 2, **characterised in that** the measurement of the wobble movement in step b) comprises the following steps:

> b1) determining the inclination of the radial profile of the lens surface (16) in a region of the lens surface (16) which lies inside a measurement window;
> b2) rotating the lens surface (16) about the rotation axis (30) so that a different region of the lens surface (16) enters the measurement window;
> b3) determining the inclination of the radial profile of the lens surface (16) in the different region of the lens surface.

4. Method according to Claim 1, **characterised in that** the distance from a radial profile of the lens surface (16) to a reference point is measured in different rotation positions of the lens (16) in order to measure the wobble movement in step b).

5. Method according to Claim 4, **characterised in that** the distance is measured contactlessly.

6. Method according to one of the preceding claims, **characterised in that** the reference axis is the rotation axis (30).

7. Method according to one of Claims 1 to 5, **characterised in that** the position of the reference axis (22) relative to the rotation axis (30) is known, and **in that** the position of the symmetry axis (20) relative to the reference axis (22) is determined from the position of the symmetry axis (22) relative to the rotation axis (30), on the one hand, and the position of the reference axis (22) relative to the rotation axis (30) on the other hand.

8. Method according to one of the preceding claims, **characterised in that** the lens surface (16) is rotated through a total of 360° about the rotation axis (30) during the rotation of the lens (16) in step b).

9. Method according to one of the preceding claims, **characterised in that** step a) is repeated at least once during the measurement of the wobble movement in step b).

10. Method according to one of the preceding claims, **characterised in that** a first autocollimator (36a), the image-side focal point (64) of which is brought to the centre of curvature (21) of the spherical component of the lens surface (16), is used in order to determine the position of the centre of curvature (21) in step a).

11. Method according to one of Claims 2 and 3, **characterised in that** a second autocollimator (36b), the image-side focal point (64) of which is brought to the centre of curvature (21) of the region lying in the measurement window, is used in order to determine the inclination.

12. Method according to Claim 10 and according to one of Claims 2 and 3, **characterised in that** the determination of the position of the centre of curvature (21) in step a) and the determination of the inclination in step b) are carried out with a single autocollimator (36a), which is tilted about a horizontal axis (37) between steps a) and b).

13. Method according to Claim 3, **characterised in that** steps b1) to b3) are repeated for further regions which lie on a line parallel to the regions measured first.

14. Method according to Claim 11 and according to Claim 13, **characterised in that** the second autocollimator (36b) is tilted about a horizontal axis (37) before repeating steps b1) to b3) for the further regions.

15. Method according to Claim 12 and according to Claim 13, **characterised in that** the single autocollimator (36b) is tilted about the horizontal axis (37) before repeating steps b1) to b3) for the further regions.

16. Method according to one of the preceding claims, **characterised in that** the lens (10) is held adjustably in a lens frame (12) during steps a) to c).

17. Method according to Claim 16, **characterised in that** when a deviation of the position of the symmetry axis (20) of the lens (10) from a setpoint position is established, the lens (10) is adjusted in the lens frame (12) and steps a) to c) are repeated.

18. Device for determining the position of a symmetry axis of an aspherical lens surface (16) relative to a reference axis (22, 30), comprising:

a) a turntable (28) which can be rotated about a rotation axis (30) and on which a lens (10) comprising the aspherical lens surface (16) can be arranged,

b) a first measuring instrument for measuring the position of the centre of curvature (21) of the spherical component of the lens surface (16),

c) a second measuring instrument, not necessarily different from the first measuring instrument, for measuring a wobble movement which the lens surface (16) describes during rotation about a rotation axis (30), and

d) an evaluation instrument (46) which calculates the position of the symmetry axis (20) of the aspherical lens surface (16) relative to the rotation axis (30) from the measurement signals delivered by the first measuring instrument (36a; 136a) and those of the second measuring instrument (36b; 136b) for different rotation angles of the turntable (28),

**characterised in that**

the evaluation device is adapted to calculate the position of the symmetry axis (20) of the aspherical lens surface (16) relative to the rotation axis (30) even if the centre of curvature (21), the position of which is measured by the first measuring instrument, lies outside the rotation axis (30).

19. Device according to Claim 18, **characterised in that** the first measuring instrument (36a; 136a) comprises a first autocollimator, the optical axis (62a) of which is aligned coaxially with the rotation axis (30) and the image-side focal point (64) of which can be positioned in different longitudinal positions along its optical axis (62a).

20. Device according to Claim 18 or 19, **characterised in that** the second measuring instrument comprises a second autocollimator (36b), the optical axis (62b) of which makes a non-zero angle with the rotation axis (30) and the image-side focal point (74) of which can be positioned in different longitudinal positions along its optical axis (62b).

21. Device according to Claim 20, **characterised in that** the angle between the optical axis (62b) of the second autocollimator (36b) and the rotation axis (30) can be varied.

22. Device according to Claim 21, **characterised in that** the second autocollimator (36b) can be tilted about a horizontal axis (37).

23. Device according to one of Claims 19 to 22, **characterised in that** the autocollimator (36a, 36b; 136a) generates a luminous primary image which can be imaged through optics (58, 60) into a focal plane, light reflected back into the optics by a measurement object (10, 50) being directed at least partially onto a photosensitive position-resolving sensor (66a, 66b).

24. Device according to Claim 18 or 19, **characterised in that** the second measuring instrument comprises a distance sensor (136b) with which the distance between a reference point and a radial profile of the lens surface (16) along a measurement direction (186) can be measured.

25. Device according to Claim 24, **characterised in that** the angle between the measurement direction (186) and the rotation axis (30) can be varied.

26. Device according to Claim 25, **characterised in that** the distance sensor (136b) can be tilted about a horizontal axis (37).

27. Device according to one of Claims 18 to 26, **characterised by**

a) a third measuring instrument for measuring the position of the centre of curvature of the spherical component of a further lens surface on the other side from the lens surface, the third measuring instrument being arranged on an opposite side of the turntable from the first measuring instrument;

b) a fourth measuring instrument for measuring a wobble movement which the further lens surface describes during rotation about the rotation axis, the fourth measuring instrument being arranged on an opposite side of the turntable from the first measuring instrument.

28. Device according to one of Claims 18 to 27, **characterised in that** the turntable (28) comprises a holder for fastening a lens frame.

**Revendications**

1. Procédé de détermination de la position d'un axe de symétrie (20) d'une surface de lentille asphérique (16) par rapport à un axe de référence (30, 22), comportant les étapes suivantes :

   a) mesure de la position du centre de courbure (21) de la portion sphérique de la surface de lentille (16) ;
   b) mesure d'un mouvement oscillant que la surface de lentille (16) décrit pendant une rotation autour d'un axe de rotation (30) ;
   c) détermination de la position de l'axe de symétrie (20) de la surface de lentille asphérique (16) par rapport à l'axe de rotation (30) à partir des valeurs de mesure déterminées aux étapes a) et b).

   **caractérisé en ce que**
   à l'étape b), le mouvement oscillant est aussi déterminé quand le centre de courbure (21) dont la position est mesurée à l'étape a) se trouve en dehors de l'axe de rotation (30).

2. Procédé selon la revendication 1, **caractérisé en ce que** pour mesurer le mouvement oscillant à l'étape b), on mesure l'inclinaison d'un profil radial de la surface de lentille (16) dans différentes positions de rotation de la lentille (16).

3. Procédé selon la revendication 2, **caractérisé en ce que** la mesure du mouvement oscillant à l'étape b) comprend les étapes suivantes :

   b1) détermination de l'inclinaison du profil radial de la surface de lentille (16) dans une région de la surface de lentille (16) qui se situe à l'intérieur d'une fenêtre de mesure ;
   b2) rotation de la surface de lentille (16) autour de l'axe de rotation (30) de façon qu'une autre région de la surface de lentille (16) arrive dans la fenêtre de mesure ;
   b3) détermination de l'inclinaison du profil radial de la surface de lentille (16) dans l'autre région de la surface de lentille.

4. Procédé selon la revendication 1, **caractérisé en ce que** pour mesurer le mouvement oscillant à l'étape b), on mesure la distance d'un profil radial de la surface de lentille (16) à un lieu de référence dans différentes positions de rotation de la lentille (16).

5. Procédé selon la revendication 4, **caractérisé en ce que** la distance est mesurée sans contact.

6. Procédé selon une des revendications précédentes, **caractérisé en ce que** l'axe de référence est l'axe de rotation (30).

7. Procédé selon une des revendications 1 à 5, **caractérisé en ce que** la position de l'axe de référence (22) par rapport à l'axe de rotation (30) est connue, et que la position de l'axe de symétrie (20) par rapport à l'axe de référence (22) est déterminée à partir de la position de l'axe de symétrie (22) par rapport à l'axe de rotation (30) d'une part, et de la position de l'axe de référence (22) par rapport à l'axe de rotation (30) d'autre part.

8. Procédé selon une des revendications précédentes, **caractérisé en ce que** pendant la rotation de la lentille (16) à l'étape b), la surface de lentille (16) est tournée au total de 360° autour de l'axe de rotation (30).

9. Procédé selon une des revendications précédentes, **caractérisé en ce que** pendant la mesure du mouvement oscillant à l'étape b), l'étape a) est répétée au moins une fois.

10. Procédé selon une des revendications précédentes, **caractérisé en ce que** pour déterminer la position du centre de courbure (21) à l'étape a), on utilise un premier autocollimateur (36a) dont le foyer côté image (64) est amené au centre de courbure (21) de la portion sphérique de la surface de lentille (16).

11. Procédé selon une des revendications 2 ou 3, **caractérisé en ce que** pour déterminer l'inclinaison, on utilise un deuxième autocollimateur (36b) dont le foyer côté image (64) est amené au centre de courbure (21) de la région située dans la fenêtre de mesure.

12. Procédé selon la revendication 10 et selon une des revendications 2 ou 3, **caractérisé en ce que** la détermination de la position du centre de courbure (21) à l'étape a) et la détermination de l'inclinaison à l'étape b) sont effectuées avec un seul autocollimateur (36a) que l'on fait pivoter autour d'un axe horizontal (37) entre les étapes a) et b).

13. Procédé selon la revendication 3, **caractérisé en ce que** les étapes b1) à b3) sont répétées pour d'autres régions qui sont situées sur une ligne parallèle aux régions mesurées en premier lieu.

14. Procédé selon la revendication 11 et selon la revendication 13, **caractérisé en ce qu'**avant de répéter les étapes b1) à b3) pour les autres régions, on fait pivoter le deuxième autocollimateur (36b) autour d'un axe horizontal (37).

15. Procédé selon la revendication 12 et selon la revendication 13, **caractérisé en ce que** qu'avant de répéter les étapes b1) à b3) pour les autres régions, on fait pivoter l'unique autocollimateur (36b) autour de l'axe horizontal (37).

16. Procédé selon une des revendications précédentes, **caractérisé en ce que** pendant les étapes a) à c), la lentille (10) est reçue de manière réglable dans une monture de lentille (12).

17. Procédé selon la revendication 16, **caractérisé en ce que** si on constate que la position de l'axe de symétrie (20) de la lentille (10) s'écarte d'une position de consigne, on règle la lentille (10) dans la monture de lentille (12) et on répète les étapes a) à c).

18. Dispositif pour déterminer la position d'un axe de symétrie d'une surface de lentille asphérique (16) par rapport à un axe de référence (22, 30), comprenant :

　　a) une table rotative (28) tournant autour d'un axe de rotation (30), sur laquelle une lentille (10) portant la surface de lentille asphérique (16) peut être disposée,
　　b) un premier dispositif de mesure pour mesurer la position du centre de courbure (21) de la portion sphérique de la surface de lentille (16),
　　c) un deuxième dispositif de mesure, non nécessairement différent du premier dispositif de mesure, pour mesurer un mouvement oscillant que la surface de lentille (16) décrit pendant une rotation autour d'un axe de rotation (30), et
　　d) un dispositif d'évaluation (46) qui détermine la position de l'axe de symétrie (20) de la surface de lentille asphérique (16) par rapport à l'axe de rotation (30) à partir des signaux de mesure délivrés par le premier dispositif de mesure (36a; 136a) et des signaux de mesure délivrés par le deuxième dispositif de mesure (36b ; 136b) à différents angles de rotation de la table rotative (28),

　　**caractérisé en ce que**
　　le dispositif d'évaluation est conçu pour déterminer aussi la position de l'axe de symétrie (20) de la surface de lentille asphérique (16) par rapport à l'axe de rotation (30) quand le centre de courbure (21), dont la position est mesurée par le premier dispositif de mesure, se trouve en dehors de l'axe de rotation (30).

19. Dispositif selon la revendication 18, **caractérisé en ce que** le premier dispositif de mesure (36a; 136a) présente un premier autocollimateur dont l'axe optique (62a) est orienté coaxialement à l'axe de rotation (30) et dont le foyer côté image (64) peut être positionné dans différentes positions longitudinales le long de son axe optique (62a).

20. Dispositif selon la revendication 18 ou 19, **caractérisé en ce que** le deuxième dispositif de mesure présente un deuxième autocollimateur (36b) dont l'axe optique (62b) fait un angle différent de zéro avec l'axe de rotation (30) et dont le foyer côté image (74) peut être positionné dans différentes positions longitudinales le long de son axe optique (62b).

21. Dispositif selon la revendication 20, **caractérisé en ce que** l'angle entre l'axe optique (62b) du deuxième autocollimateur (36b) et l'axe de rotation (30) est modifiable.

22. Dispositif selon la revendication 21, **caractérisé en ce que** le deuxième autocollimateur (36b) peut pivoter autour d'un axe horizontal (37).

23. Dispositif selon une des revendications 19 à 22, **caractérisé en ce que** l'autocollimateur (36a, 36b ; 136a) produit une image originale lumineuse qui peut être reproduite dans un plan focal par une optique (58, 60), de la lumière réfléchie dans l'optique par un objet de mesure (10, 50) étant dirigée au moins partiellement sur un capteur photosensible à résolution locale (66a, 66b).

24. Dispositif selon la revendication 18 ou 19, **caractérisé en ce que** le deuxième dispositif de mesure présente un capteur de distance (136b) au moyen duquel on peut mesurer la distance entre un lieu de référence et un profil radial de la surface de lentille (16) le long d'une direction de mesure (186).

25. Dispositif selon la revendication 24, **caractérisé en ce que** l'angle entre la direction de mesure (186) et l'axe de rotation (30) est modifiable.

26. Dispositif selon la revendication 25, **caractérisé en ce que** le capteur de distance (136b) peut pivoter autour d'un axe horizontal (37).

27. Dispositif selon une des revendications 18 à 26, **caractérisé par** :

a) un troisième dispositif de mesure pour mesurer la position du centre de courbure de la portion sphérique d'une autre surface de lentille opposée à la surface de lentille, le troisième dispositif de mesure étant disposé sur un côté de la table rotative opposé au premier dispositif de mesure ;

b) un quatrième dispositif de mesure pour mesurer un mouvement oscillant que l'autre surface de lentille décrit pendant une rotation autour de l'axe de rotation, le quatrième dispositif de mesure étant disposé sur un côté de la table rotative opposé au premier dispositif de mesure.

28. Dispositif selon une des revendications 18 à 27, **caractérisé en ce que** la table rotative (28) présente un support pour la fixation d'une monture de lentille.

Fig. 1

Fig. 2

Fig. 3

## Fig. 4

**Fig. 5**

Fig. 6a    Fig. 6b    Fig. 6c    Fig. 6d

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 00128188 A
- DE 102005013755 A1
- US 20050007547 A1
- US 7046351 B1

**In der Beschreibung aufgeführte Nicht-Patentliteratur**

- **C. DIETZ ; M. JURCA.** Eine Alternative zum Laser. *Sensormagazin,* 03. November 1997, (4), 15-18